# EUROPEAN PATENT APPLICATION

(11) **EP 2 434 563 A2**
(43) Date of publication of application: **28.03.2012**
(21) Application number: 11158161.7
(22) Date of filing: 14.03.2011
(51) Int. Cl.: H01M 2/10

(54) **Connecting assembly for batteries and battery assembly**

(30) Priority: 24.09.2010 TW 099218454
(71) Applicant: Exa Energy Technology Co., Ltd., Taichung City 407 (TW)
(72) Inventor: Jan, Yihsong, Taipei City (TW); Chao, Fang-Hui, Taichung City (TW); Chen, Han-Chen, Taichung City (TW); Chen, Hsi-Hsing, Taichung City (TW); Lin, Hsiu-Kuan, Taichung City (TW); Ko, Fang-Shu, Taichung City (TW)
(74) Representative: Lang, Christian

(57) **Abstract**

A connecting assembly of the present invention is used for connecting a first battery to a second battery. The connecting assembly includes a base plate, two side plates and two fixation plates. The base plate is provided for being placed on a top surface of the first battery. The side plates extend from the base plate and extend away from the first battery. The fixation plates extend lateral from the side plates. A predetermined distance is defined between the fixation plates and the base plate. The fixation plates are provided for the second battery to be connected therewith. As such, the second battery can be firmly assembled on the first battery by the connecting assembly. Batteries can be gathered up so as to be easily assembled.

## Description

### BACKGROUND OF THE INVENTION

### Field of the Invention

The present invention relates to a connecting assembly for batteries and a battery assembly.

### Description of the Prior Art

To obtain greater performance, it is suggested by the inventor of the present invention that several kinds of batteries may be connected, as disclosed in TW M387034. However, batteries may be individually disposed on machines. Space occupied by the batteries may be enlarged. Moreover, more fixing components are needed.

The present invention is, therefore, arisen to obviate or at least mitigate the above mentioned disadvantages.

### SUMMARY OF THE INVENTION

The main object of the present invention is to provide a connecting assembly which is connected with batteries so as to reduce the space occupied by batteries.

To achieve the above and other objects, a connecting assembly of the present invention is adapted for connecting a first battery to a second battery. The connecting assembly includes a base plate, two side plates and two fixation plates.

The base plate is adapted for being placed on a top surface of the first battery.

The side plates extend from the base plate. The side plates extend away from the first battery.

The fixation plates extend laterally from the side plates. A predetermined distance is defined between the fixation plates and the base plate. The fixation plates are adapted for the second battery to be connected therewith.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a breakdown drawing showing a battery assembly in a first embodiment of the present invention;
Fig. 2 is a combination drawing showing a battery assembly in a first embodiment of the present invention;
Fig. 3 is a side view showing a battery assembly in a first embodiment of the present invention;
Fig. 4 is a stereogram showing a battery assembly in a second embodiment of the present invention;
Fig. 5 is a stereogram showing a connecting assembly in a third embodiment of the present invention.

### DETAILED DESCRIPTION OF THE PREFERRED EMBODIMENTS

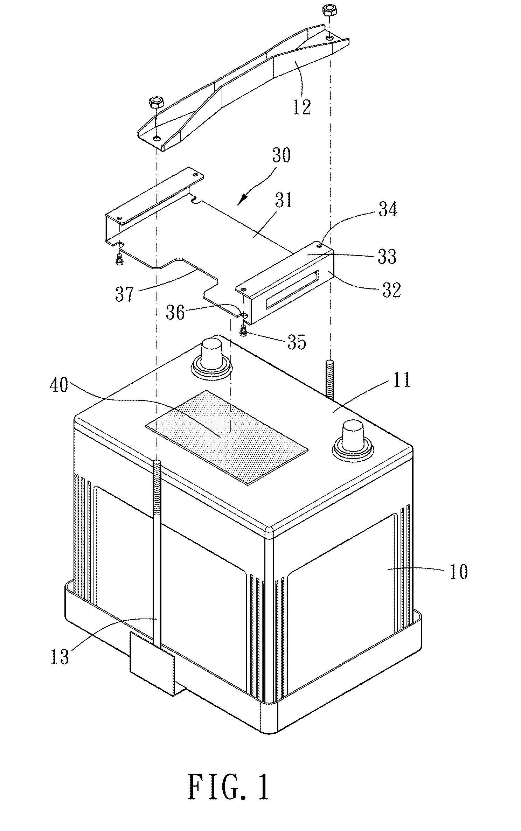

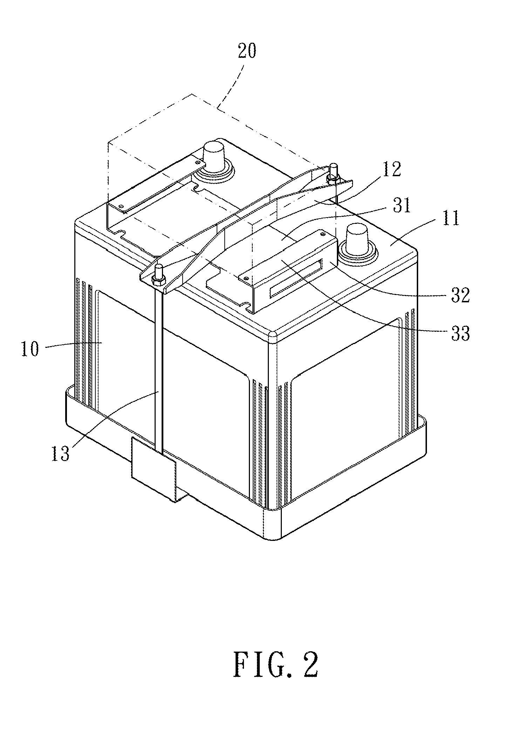

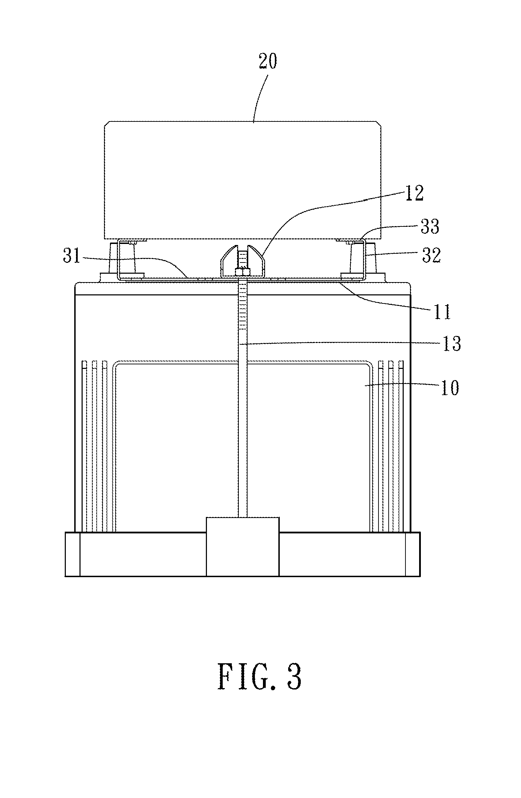

Please refer to Fig. 1 to Fig. 3 for a first embodiment of the present invention. The battery assembly of the present embodiment includes a first battery 10, a second battery 20 and a connecting assembly 30.

The first battery 10 has a top surface 11, a fixation member 12 and at least a threaded pole 13. The fixation member 12 is adapted for being pressurizedly placed on the top surface 11. More specifically, the threaded pole 13 is screwed on at least one end of the fixation member 12 so as to exert pressure upon the fixation member 12. More particularly, the first battery may be a lead-acid battery.

The connecting assembly 30 is used for connecting batteries. The connecting assembly 30 includes a base plate 31, two side plates 32 and two fixation plates 33. The base plate 31 is placed on the top surface 11 of the first battery 10. The base plate 31 is firmly positioned between the fixation member 12 and the top surface 11. The side plates 32 extend from the base plate 31, extending away from the first battery 10. Preferably, the side plates 32 extend perpendicularly from two sides of the base plate 31. The fixation plates 33 extend laterally from the side plates 32 inwardly or outwardly. A predetermined distance is defined between the fixation plates 33 and the base plate 31 so as to receive the fixation member 12 therein. The fixation plates 33 are adapted for the second battery 20 to be connected therewith. More particularly, the second battery 20 may be a lithium iron phosphate battery or other battery.

Preferably, each one of the fixation plates 33 has at least a through hole 34. The through holes 34 are adapted for threaded members 35 to penetrate therethrough, so that the threaded members 35 are able to be screwed on the second battery. A hollow portion 36 is defined by the base plate 31. The hollow portion 36 corresponds to the through holes 34. The hollow portion 36 may be a hole or a notch shown in figures. The hollow portion 36 is adapted for threaded members 35 or screwdrivers to pass therethrough.

Besides, a groove 37 may be defined by the base plate 31. The groove 37 is located between the side plates 32. The groove 37 is adapted for the threaded pole 13 to penetrate therethrough, so that the threaded pole 13 can be screwed on the fixation member 12.

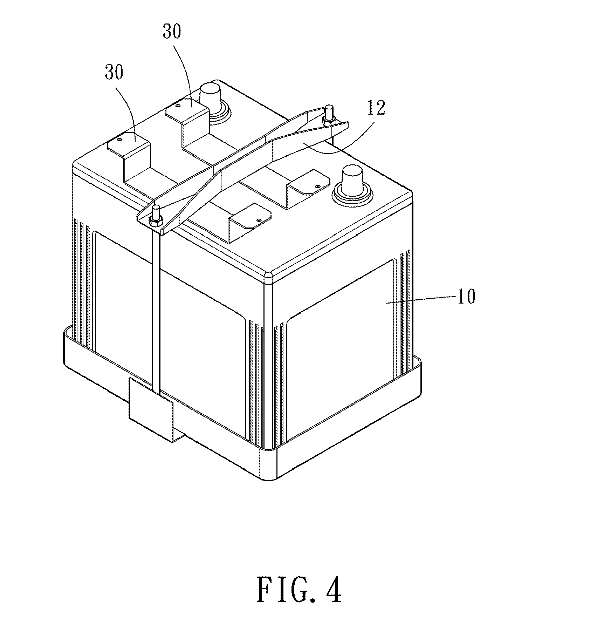

Please refer to Fig. 4. In a second embodiment of the present invention, the battery assembly has two connecting assemblies 30. The quantity of the connecting assemblies 30 may be changed under other appropriate conditions.

Please refer to Fig. 1. A skidproof pad 40 or a velcro pad may be positioned between the base plate 31 and the top surface 11 of the first battery 10. As such, the base plate 31 can not move laterally with respect to the top surface 11.

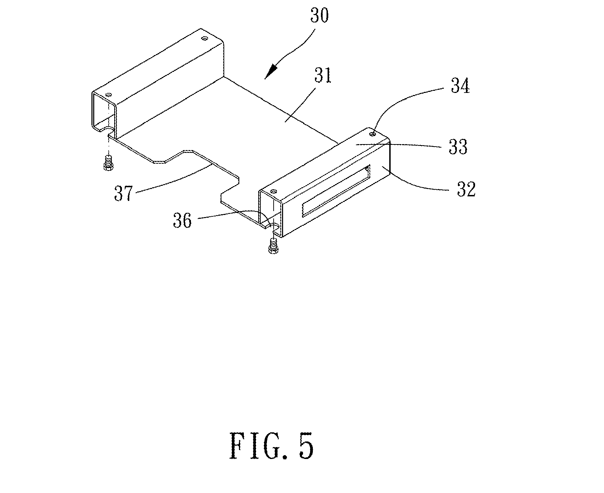

Please refer to Fig. 5. In a third embodiment of the present invention, each side plate 32 may be a double-layer structure. The layers of the side plate 32 are spaced apart from each other. The fixation plate 33 may straddle upon the layers of the side plate 32.

Accordingly, the connecting assembly of the present invention can be connected between batteries so as to fix the batteries. A second battery can be firmly assembled on a first battery by the connecting assembly. As a result, space occupied by batteries is reduced. In other words, batteries are gathered up. Moreover, battery assembly is easier to be assembled on machines.

## Claims

1. A connecting assembly for batteries, being adapted for connecting a first battery (10) to a second battery (20), the connecting assembly comprising:
a base plate (31), being adapted for being placed on a top surface (11) of the first battery (10);
two side plates (32), extending from the base plate (31), the side plates (32) extending away from the first battery (10);
two fixation plates (33), extending laterally from the side plates (32), a predetermined distance being defined between the fixation plates (33) and
the base plate (31), the fixation plates (33) being adapted for the second battery (20) to be connected therewith.

2. The connecting assembly of claim 1, wherein each one of the fixation plates (33) has at least a through hole (34), the through holes (34) are adapted for threaded members (35) to penetrate therethrough, so that the threaded members (35) are able to be screwed on the second battery (20).

3. The connecting assembly of claim 2, wherein a hollowed portion (36) is defined by the base plate (31), the hollowed portion (36) is adapted for threaded members (35) to pass therethrough.

4. The connecting assembly of claim 1, wherein a groove (37) is defined by the base plate (31), the groove (37) is located between the side plates (32).

5. A battery assembly, comprising:
a first battery (10), having a top surface (11) and a fixation member (12),
the fixation member (12) being adapted for being pressurizedly placed on the top surface (11);
a second battery (20);
at least a connecting assembly (30), comprising a base plate (31), two side plates (32) and two fixation plates (33), the base plate (31) being placed on the top surface (11), the base plate (31) being firmly positioned between the fixation member (12) and the top surface (11), the side plates (32) extending from the base plate (31), the side plates (32) extending away from the first battery (10), the fixation plates (33) extending laterally from the side plates (32), a predetermined distance being defined between the fixation plates (33) and the base plate (31) so as to receive the fixation member (12) therein, the fixation plates (33) being adapted for the second battery (20) to be connected therewith.

6. The battery assembly of claim 5, wherein each one of the fixation plates (33) has at least a through hole (34), the through holes (34) are adapted for threaded members (35) to penetrate therethrough, so that the threaded members (35) are able to be screwed on the second battery (20).

7. The battery assembly of claim 6, wherein a hollowed portion (36) is defined by the base plate (31), the hollowed portion (36) is adapted for threaded members (35) to pass therethrough.

8. The battery assembly of claim 5, wherein a groove (37) is defined by the base plate (31), the groove (37) is located between the side plates (32), the first battery (10) further comprises a threaded pole (13), the threaded pole (13) is screwed on at least an end of the fixation member (12), the groove (37) is adapted for the threaded pole (13) to penetrate therethrough.

9. The battery assembly of claim 5, wherein one of a skidproof pad (40) and a velcro pad is positioned between the base plate (31) and the top surface (11).
